# EUROPEAN PATENT APPLICATION

(11) **EP 4 664 752 A1**
(43) Date of publication of application: **17.12.2025**
(21) Application number: 24805411.6
(22) Date of filing: 26.07.2024
(51) Int. Cl.: H02S 40/10

(54) **PARKING MECHANISM AND PARKING SYSTEM**

(30) Priority: 30.04.2024 CN 202410534337
(71) Applicant: Arctech Solar Holding Co., Ltd., Jiangsu 215331 (CN)
(72) Inventor: YANG, Ying, Jiangsu 215331 (CN); LIU, Haijun, Jiangsu 215331 (CN)
(74) Representative: Michalski Hüttermann & Partner Patentanwälte mbB
(86) International application number: PCT/CN2024/107690
(87) International publication number: WO 2025/227523

(57) **Abstract**

A parking mechanism includes a parking platform, a limiting plate and an elastic element. The limiting plate has a hinge portion positioned and connected to the parking platform. The limiting plate further includes a first end portion and a second end portion which are disposed oppositely with respect to the hinge portion. The first end portion is connected to the elastic element and the second end portion can protrude upwardly beyond the parking platform. The limiting plate is used to limit a forward movement of a traveling wheel of the cleaning robot. One end of the elastic element is connected to the limiting plate, and another end of the elastic element is connected to a carrier. The present invention also discloses a parking system having the parking mechanism.

## Description

### CROSS-REFERENCE TO RELATED APPLICATION

The present invention claims priority of a Chinese Patent Application No. 202410534337.4, filed on April 30, 2024 and titled "PARKING MECHANISM AND PARKING SYSTEM", the entire content of which is incorporated herein by reference.

### TECHNICAL FIELD

The present invention relates to the field of photovoltaics, and in particular to a parking mechanism and a parking system of a cleaning robot.

### BACKGROUND

With the development of technology, there are various cleaning robots on the market that can automatically walk and clean the surface of photovoltaic modules. When the cleaning work is completed, the cleaning robots need to park on the side. Currently, most of the market adopts electric actuators to allow the cleaning robots to park on the side after cleaning. The cost of electric actuators is relatively high, and the start or stop of electric actuators depends on the sensitivity of the internal signal sensor. Large-scale photovoltaic power plants are generally built in relatively remote areas, where the working environment is relatively harsh. The sensitivity of the signal sensor is easily interfered by the external environment. There may be situations where the signal fails and the station cannot be stabilized, and there is a risk of unstable parking.

### SUMMARY

An object of the present invention is to provide a parking mechanism and a parking system that can make a cleaning robot dock stably on a parking platform, thereby improving the stability when parking.

In order to achieve the above object, the present invention adopts the following first technical solution:
a parking mechanism, including:
a parking platform;
a limiting plate configured to limit a forward movement of a traveling wheel of a cleaning robot; the limiting plate including a hinge portion positioned and connected to the parking platform; the limiting plate further including a first end portion and a second end portion which are disposed oppositely relative to the hinge portion; the second end portion being capable of protruding upwardly beyond the parking platform; and
an elastic element, one end of the elastic element being connected to the first end portion of the limiting plate, and another end of the elastic element being connected to a carrier.

As a further improved first technical solution of the present invention, the elastic element is a tension spring; in a natural state of the elastic element, the second end portion protrudes beyond the parking platform; in a stretched state of the elastic element, the second end portion is pressed by a self-gravity of the cleaning robot to be hidden under the parking platform.

As a further improved first technical solution of the present invention, the limiting plate includes an upper edge connected between the first end portion and the second end portion; the upper edge at least partially adopts an arc-shaped structure with an upward opening.

As a further improved first technical solution of the present invention, the limiting plate includes a side edge located at the second end portion; the side edge is provided with a toothed structure configured to contact a traveling wheel of the cleaning robot.

As a further improved first technical solution of the present invention, the cleaning robot includes a windproof hook; the parking mechanism includes a lower gear lever; the lower gear lever is fixedly installed below the parking platform at a distance from the parking platform, and cooperates with the windproof hook of the cleaning robot to limit an upward movement of the cleaning robot; another end of the elastic element is connected to the lower gear lever.

As a further improved first technical solution of the present invention, the parking mechanism further includes a limiting pin; the limiting pin is fixed on the limiting plate and is movable up and down between the parking platform and the lower gear lever for position limit.

As a further improved first technical solution of the present invention, the cleaning robot further includes a guiding wheel; the parking platform at least includes two cross beams arranged in parallel in a front-rear direction and two longitudinal cross beams arranged in parallel in a left-right direction; the cross beam includes a first cross beam and a second cross beam; the first cross beam, the second cross beam and the two longitudinal cross beams together form a parking space for the cleaning robot; the first cross beam includes a limiting portion provided at an end of the first cross beam; the limiting portion protrudes beyond a corresponding longitudinal cross beam and is configured to provide a position limit for the guiding wheel of the cleaning robot.

As a further improved first technical solution of the present invention, the cross beam further includes a third cross beam arranged parallel to the first cross beam and the second cross beam; the second cross beam is located between the first cross beam and the third cross beam; the two longitudinal cross beams continue to extend from the second cross beam in a direction close to the third cross beam; the two longitudinal cross beams, the second cross beam and the third cross beam together form an installation space for a photovoltaic module; the photovoltaic module is configured to charge the cleaning robot.

As a further improved first technical solution of the present invention, each of the longitudinal cross beams includes a first rod and a second rod; the first rod and the second rod are disposed adjacent to each other to form a clamping space of the limiting plate between the first rod and the second rod.

As a further improved first technical solution of the present invention, a gasket plate is further provided between the limiting plate and each of the first rod and the second rod; the gasket plate includes a vertical portion and a horizontal portion; one side of the vertical portion is aligned with the limiting plate, and another side of the vertical portion is aligned with the first rod or the second rod; the horizontal portion is flush with a bottom of the first rod or the second rod.

As a further improved first technical solution of the present invention, the lower gear lever includes a main body portion fixedly connected below each longitudinal cross beam and an end cantilever portion extending forwardly from the main body portion; the end cantilever portion is tilted upwardly to guide the windproof hook to enter below the main body portion.

As a further improved first technical solution of the present invention, the parking mechanism further includes a hinge shaft; wherein the hinge portion defines a hinge hole; the hinge shaft passes through the hinge hole, and is positioned and connected to the longitudinal cross beam.

In order to achieve the above object, the present invention adopts the following second technical solution: a parking system, including: a cleaning robot and the parking mechanism described above; the parking mechanism providing a position limit for the cleaning robot; the cleaning robot including a brush roller shaft, two front traveling wheels and two rear traveling wheels; the brush roller shaft being connected between the front traveling wheels and the rear traveling wheels.

As a further improved second technical solution of the present invention, the cleaning robot further includes an L-shaped windproof hook; the windproof hook includes a vertical rod and a horizontal rod; the longitudinal cross beam and/or the lower gear lever provide left-right direction limit for the vertical rod; the horizontal rod of the windproof hook extends below the lower gear lever so that the lower gear lever is able to provide an upward position limit for the cleaning robot.

As a further improved second technical solution of the present invention, the cleaning robot further includes guiding wheels; the guiding wheels are located on two sides of the cleaning robot to guide the cleaning robot while walking on the parking platform.

Compared with the prior art, the present invention has at least one of the following beneficial effects:
1. The present invention realizes the mechanical limit of the cleaning robot when it is parked through structures such as limiting plates, ensuring that the cleaning robot is able to dock stably on the parking platform, and having simple structure and low cost.
2. The limiting portion is provided at the end of the first cross beam of the present invention to provide a position limit for the guiding wheel of the cleaning robot, thereby preventing the cleaning robot from moving backward when parked;
3. The present invention has the lower gear lever that can cooperate with the windproof hook of the cleaning robot. The windproof hook includes the vertical rod and the horizontal rod. Therefore, on the basis that the limiting plate is used to limit the forward and backward movement of the cleaning robot, the horizontal rod of the windproof hook extends into a lower part of the lower gear lever and hooks it, so that the lower gear lever is able to provide an upward position limit for the cleaning robot to prevent the cleaning robot from moving upwardly when parking on the parking platform.
4. The vertical rod of the windproof hook of the present invention is limited by the lower gear lever and/or the longitudinal cross beam of the parking platform, thereby providing left and right position limits for the cleaning robot when it is parked, and preventing the cleaning robot from moving in the left and right directions due to the influence of external forces (such as wind) when it is parked.

### BRIEF DESCRIPTION OF DRAWINGS

FIG. 1 is a state view of a cleaning robot of a parking system of the present invention before parking on a parking mechanism;
FIG. 2 is a state view of the cleaning robot in the parking system of the present invention during a parking process on the parking mechanism, and a limiting plate is flattened due to the gravity of the cleaning robot itself;
FIG. 3 is a parking state view of the cleaning robot in the parking system of the present invention on the parking mechanism;
FIG. 4 is a view of an initial state of the cleaning robot in the parking system of the present invention, which needs to perform cleaning actions and therefore leaves the parking system;
FIG. 5 is a schematic view of the cleaning robot in the parking system of the present invention, which shows the contact between a traveling wheel and a toothed structure on the limiting plate when the cleaning robot is leaving the station.
FIG. 6 is a perspective view of the limiting plate in the parking mechanism of the present invention;
FIG. 7 is a perspective assembly view of the parking mechanism of the present invention;
FIG. 8 is a partially exploded perspective view of the parking mechanism of the present invention;
FIG. 9 is a top view of the parking mechanism of the present invention;
FIG. 10 is an enlarged view of part A in FIG. 9;
FIG. 11 is a cross-sectional view taken along line B-B in FIG. 9; and
FIG. 12 is an enlarged view of part C in FIG. 11.

### DETAILED DESCRIPTION

Exemplary embodiments of the present invention will be described in detail below with reference to the accompanying drawings. If there are several specific embodiments, features of these embodiments may be combined with each other provided there is no conflict. When the description refers to the drawings, the same numbers in different drawings refer to the same or similar elements, unless otherwise stated. The following description of exemplary embodiments does not represent all embodiments consistent with the present invention. Rather, they are merely examples of devices, products and/or methods consistent with aspects of the present invention as recited in the claims of the present invention.

The terminologies used in the present invention are only for the purpose of describing specific embodiments, and are not intended to limit the protection scope of the present invention. The singular forms "a", "said", and "the" used in the specification and claims of the present invention are also intended to include plural forms unless the context clearly indicates other meanings.

It should be understood that the terms "first", "second" and similar words used in the specification and claims of the present invention do not represent any order, quantity or importance, but are only used to distinguish different components. Similarly, "an" or "a" and other similar words do not mean a quantity limit, but mean that there is at least one. Unless otherwise noted, "front", "rear", "top", "bottom" and similar words are for ease of description only and are not limited to one location or one spatial orientation. Similar words such as "include" or "comprise" mean that elements or objects appear before "include" or "comprise" cover elements or objects listed after "include" or "comprise" and their equivalents, and do not exclude other elements or objects. The term "a plurality of" mentioned in the present disclosure includes two or more.

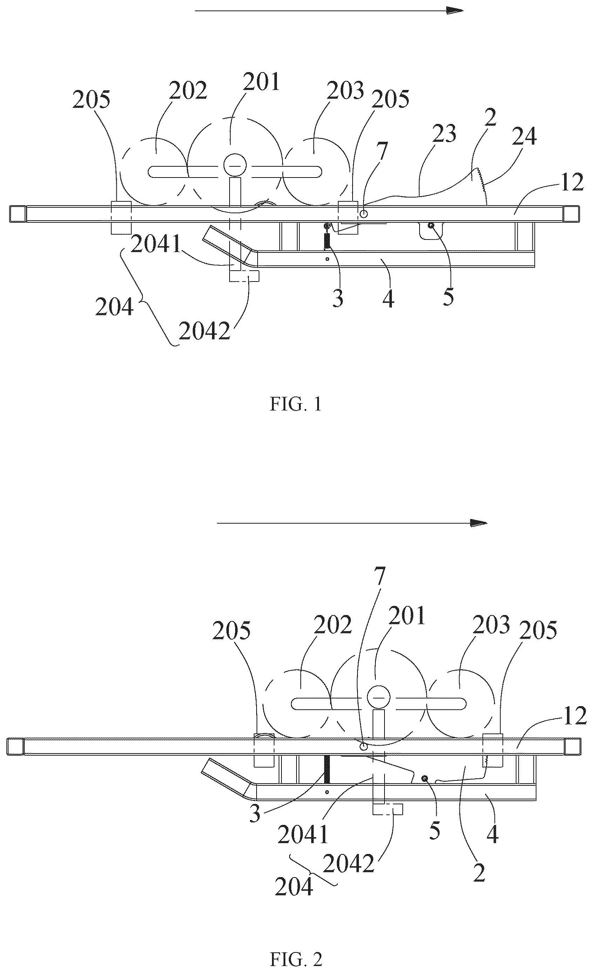

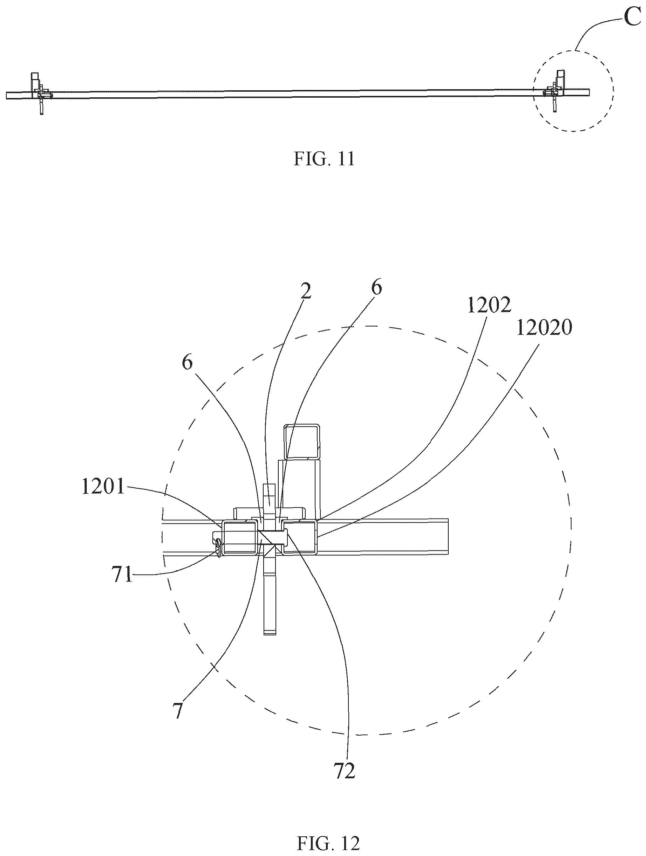

Referring to FIG. 1 to FIG. 12, the present invention first discloses a parking mechanism 100 for parking a cleaning robot 200 after the cleaning work is completed. The parking mechanism 100 includes a parking platform 1, a limiting plate 2 and an elastic element 3. The limiting plate 2 has a hinge portion 20 positioned and connected to the parking platform 1. The limiting plate 2 further includes a first end portion 21 and a second end portion 22 which are disposed oppositely with respect to the hinge portion 20. The first end portion 21 is connected to the elastic element 3 and the second end portion 22 is capable of protruding upwardly beyond the parking platform 1. The limiting plate 2 is used to limit a forward movement of a traveling wheel of the cleaning robot 200. One end of the elastic element 3 is connected to the limiting plate 2, and another end of the elastic element 3 is connected to a carrier. The carrier described here may be a lower gear lever 4 (described in detail later) provided on the parking platform 1, or a upright column (not shown), or a support frame (not shown) extending from the parking platform 1. The function of the carrier is to provide positioning of the another end of the elastic element 3. The parking mechanism 100 of the present invention realizes the mechanical position limit of the cleaning robot 200 when it is parked through the limiting plate 2 and other related structures, ensuring that the cleaning robot 200 can dock stably on the parking platform 1, and having simple structure and low cost.

Referring to FIG. 1 to FIG.7, the cleaning robot 200 includes a roller brush shaft 201, a front traveling wheel 202 and a rear traveling wheel 203. The roller brush shaft 201 is connected between the front traveling wheel 202 and the rear traveling wheel 203. The roller brush shaft 201 is provided with bristles for cleaning the photovoltaic modules. Two front traveling wheels 202 and two rear traveling wheels 203 are provided, respectively. One front traveling wheel 202 and one rear traveling wheel 203 are provided on each side of the cleaning robot 200 in a left-right direction. The front traveling wheels 202 and the rear traveling wheels 203 on each side are disposed front and back. A limiting plate 2 and an elastic element 3 are provided on the left and right sides of the parking platform 1, respectively. The limiting plate 2 and elastic element 3 on each side of the parking platform 1 are arranged correspondingly with the front traveling wheel 202 and the rear traveling wheel 203 on each side of the cleaning robot 200 so as to limit the corresponding traveling wheel. In a specific embodiment, the cleaning robot 200 further includes a plurality of guiding wheels 205. The guiding wheels 205 are located on the left and right sides of the cleaning robot 200, and serve as a guide for the cleaning robot 200 to walk on the parking platform 1. Referring to FIG. 1 to FIG. 12 again, the cleaning robot 200 further has a plurality of windproof hooks 204. Similarly, the windproof hooks 204 are provided on the left and right sides of the cleaning robot 200, respectively. Therefore, in a preferred embodiment, the present invention further discloses the parking mechanism 100 for preventing the cleaning robot 200 from swaying in the wind due to the influence of negative wind from the back when parking on the parking platform. The windproof hook 204 of the cleaning robot 200 has an L-shaped structure. Specifically, the windproof hook 204 includes a vertical rod 2041 and a horizontal rod 2042. The parking mechanism 100 includes the parking platform 1, the limiting plate 2, the elastic element 3 and the lower gear lever 4. The limiting plate 2 has a hinge portion 20 positioned and connected to the parking platform 1. The limiting plate 2 further includes a first end portion 21 and a second end portion 22 which are disposed oppositely with respect to the hinge portion 20. The first end portion 21 is connected to the elastic element 3 and the second end portion 22 is capable of protruding upwardly beyond the parking platform 1. The limiting plate 2 is used to limit a forward movement of the cleaning robot 200. A height of the second end portion 22 is not less than a radius of the traveling wheel. Preferably, the height of the second end portion 22 is greater than the radius of the traveling wheel, thereby ensuring that the traveling wheel (specifically the rear traveling wheel 203 ) of the cleaning robot 200 is stably limited by the second end portion 22 when the cleaning robot 200 is parked. One end of the elastic element 3 is connected to the limiting plate 2 and the other end of the elastic element 3 is connected to the lower gear lever 4. Circular protrusions 8 for fixing the elastic element 3 are respectively provided on the limiting plate 2 and the lower gear lever 4, so that two ends of the elastic element 3 are respectively fixed in the corresponding circular protrusions 8, thereby realizing the fixation of the elastic element 3. It is understandable that the elastic element 3 can be fixed to the limiting plate 2 and the lower gear lever 4 in other forms, which is not limited here.

Referring to FIG. 1 to FIG. 4, FIG. 7 and FIG. 8, the lower gear lever 4 is fixedly spaced below the parking platform 1 at a distance from the parking platform 1. The lower gear lever 4 can cooperate with the windproof hook 204 of the cleaning robot 200 to limit an upward movement of the cleaning robot 200. Specifically, the horizontal rod 2042 of the windproof hook 204 extends below the lower gear lever 4 and hooks the lower gear lever 4 so that the lower gear lever 4 can provide an upward position limit for the cleaning robot 200 to prevent the cleaning robot 200 from moving upwardly when parked. Therefore, on the basis that the limiting plate 2 is used to limit the forward movement of the cleaning robot 200, the horizontal rod 2042 of the windproof hook 204 extends into a lower part of the lower gear lever 4 and hooks it, so that the lower gear lever 4 can provide an upward position limit for the cleaning robot 200 to prevent the cleaning robot 200 from moving upwardly when parking on the parking platform 1. This enables the cleaning robot 200 in a windy environment to still dock stably on the parking platform 1, thereby improving the stability when parked.

Referring to FIG. 1 to FIG. 4, FIG. 7 and FIG. 8, the parking mechanism 100 of the present invention further includes a limiting pin 5. The limiting pin 5 is fixed on the limiting plate 2 and is movable up and down between the parking platform 1 and the lower gear lever 4 to limit the position. Since the limiting plate 2 is hinged on the parking platform 1, and the first end portion 21 is connected to the elastic element 3 and is elastically pulled downwardly, that is, referring to FIG. 1 for details, the limiting plate 2 is like a seesaw. Since the elastic element 3 elastically pulls the first end portion 21 downwardly in its natural state, the second end portion 22 in the initial state protrudes upwardly beyond the parking platform 1. Because the cleaning robot 200 needs to cross the upwardly protruding second end portion 22 when parking from front to back on the parking platform 1, at least part of the limiting plate 2 will rotate up and down (or in other words, when the first end portion 21 rotates upwardly, the second end portion 22 rotates downwardly; when the first end portion 21 rotates downwardly, the second end portion 22 rotates upwardly). The present invention provides the limiting pin 5 for the purpose of limiting the up and down rotation of the limiting plate 2 within a reasonable range by moving it up and down between the parking platform 1 and the lower gear lever 4. On the one hand, it is avoided that the cleaning robot 200 is difficult to cross the limiting plate 2 due to excessive upward rotation of the second end portion 22. On the other hand, it prevents the elastic element 3 from being over-stretched and causing failure of elastic recovery.

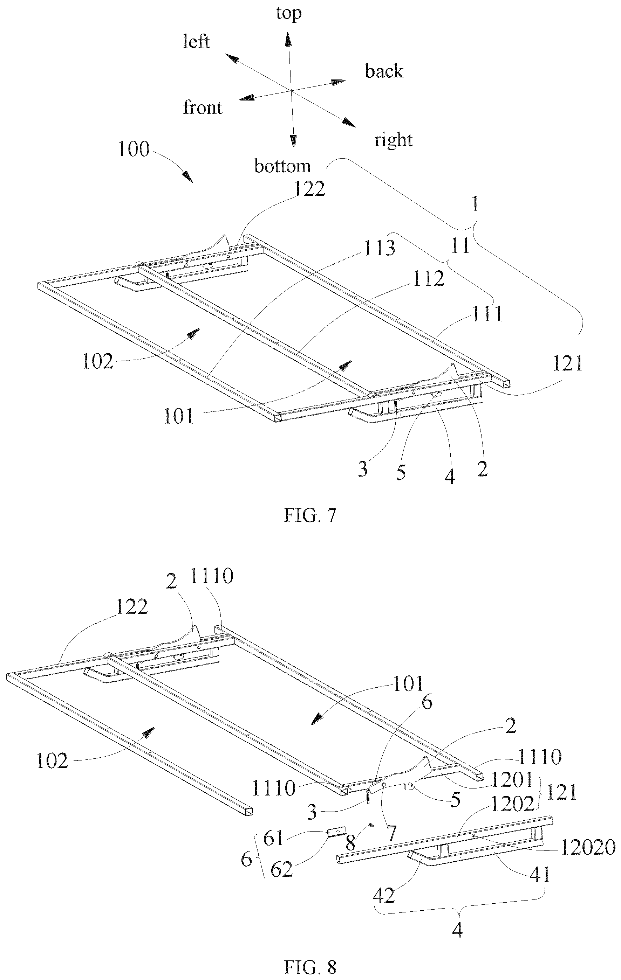

Referring to FIG. 7 and FIG. 8, one end of the elastic element 3 (specifically, a tension spring) is fixed on the limiting plate 2, and the other end of the elastic element 3 is fixed on the lower gear lever 4. In the natural state of the elastic element 3, the second end portion 22 protrudes beyond the parking platform 1. When the cleaning robot 200 parks on the parking platform 1, the cleaning robot 200 moves toward the second end portion 22 and gradually presses the second end portion 22 down until it is flush with the parking platform 1. During this process, the first end portion 21 is lifted upwardly. The elastic element 3 is stretched. In the stretched state of the elastic element 3, the second end portion 22 is pressed by the self-gravity of the cleaning robot 200 until it is hidden under the parking platform 1. When the limiting pin 5 moves to contact the lower gear lever 4, the limiting plate 2 is restricted from further movement to prevent the elastic element 3 from being excessively stretched. When the traveling wheel (specifically the rear traveling wheel 203) crosses the limiting plate 2, under the action of the tensile force of the elastic element 3, the limiting plate 2 is driven to reset. At this time, the rear traveling wheel 203 is stably limited to a side of the second end portion 22 away from the first end portion 21, thereby achieving stable parking of the cleaning robot 200 on the parking platform 1. In practical applications, the parking mechanism 100 is generally installed at an end of a row of photovoltaic brackets (not shown) and is supported by an upright column (not shown). A bottom end of the upright column is directly or indirectly fixed to the ground. A top of the upright column is fixedly connected to the parking mechanism 100 for supporting and fixing the parking mechanism 100. In addition to being connected to the lower gear lever 4, one end of the elastic element 3 can also be connected to the upright column or other structural components extending from the parking platform 1. There are many connection methods, as long as the connection of the elastic element 3 can be realized, no limitation is made here.

Referring to FIG. 1, FIG. 5 and FIG. 6, the limiting plate 2 includes an upper edge 23 connected between the first end portion 21 and the second end portion 22. The upper edge 23 adopts an arc-shaped structure at least partially. On the one hand, it is convenient to cooperate with the traveling wheels of the cleaning robot 200, so that the traveling wheels can move smoothly on the parking platform 1 and better achieve parking. On the other hand, the arc-shaped structure is in a concave shape with an upward opening. When the second end portion 22 is pressed down by the cleaning robot 200, the upward arc-shaped structure increases the distance between the limiting plate 2 and the roller brush shaft 201 of the cleaning robot 200, thereby avoiding the wear of the bristles due to the close distance to the roller brush shaft 201 during the parking process.

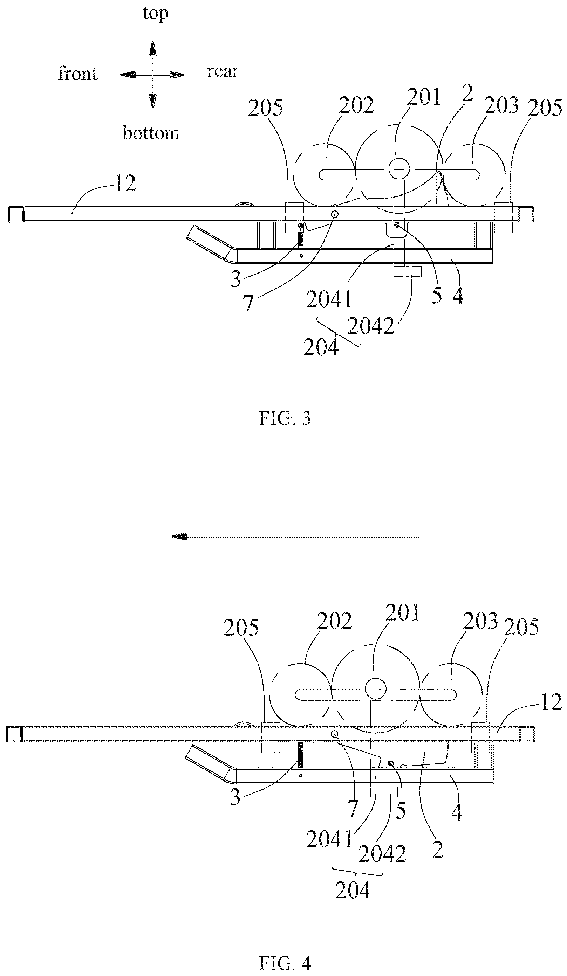

Referring to FIG. 1 to FIG. 6, the limiting plate 2 includes a side edge 24 located at the second end portion 22. The side edge 24 is provided with a toothed structure for contacting the traveling wheels of the cleaning robot 200. Referring to FIG. 4, specifically it is in contact with the rear traveling wheel 203. This arrangement, on the one hand, increases the friction with the rear traveling wheels 203 provided with rubber material on the outside when parking, which further improves the parking stability of the cleaning robot 200. On the other hand, when the cleaning robot 200 leaves the parking state and starts cleaning work, the rear traveling wheels 203 rotate counterclockwise, which exerts a downward force on the toothed structure of the limiting plate 2, thereby driving the limiting plate 2 to move downwardly. It can be understood that when the limiting plate 2 moves below the radius of the rear traveling wheel 203, the rear traveling wheel 203 can smoothly cross the limiting plate 2 in a reverse direction under the driving of the motor, and moves from a side where the second end portion 22 is located to a side where the first end portion 21 is located, so as to get out of the parked state. Furthermore, the outside of the traveling wheel is made of rubber. This makes the cooperation with the toothed structure closer, and the force can be better transmitted to the toothed structure, thereby making the process of releasing the parked state smoother.

Referring to FIG. 7 to FIG. 10, the parking platform 1 includes at least two cross beams 11 which are arranged in parallel in the front-rear direction, and at least two longitudinal beams 12 which are arranged in parallel in the left-right direction. The cross beam 11 includes a first cross beam 111 and a second cross beam 112. The first cross beam 111, the second cross beam 112 and the two longitudinal beams 12 together form a parking space 101 for the cleaning robot 200. A limiting portion 1110 is provided at an end of the first cross beam 111. The limiting portion 1110 protrudes beyond a corresponding longitudinal beam 12 and is used to limit the guiding wheel 205 of the cleaning robot 200. That is, the entire cleaning robot 200 is parked above the parking space 101. Regarding the traveling wheels on the left and right sides of the cleaning robot 200, i.e., the front traveling wheel 202 and the rear traveling wheel 203 on each side, one of them (specifically, the rear traveling wheel 203) spans from the front side of the limiting plate 2 to the rear side, so that the front traveling wheel 202 and the rear traveling wheel 203 are located at the front and rear sides of the limiting plate 2 to achieve parking. During the parking process, the guiding wheels 205 of the cleaning robot 200 come into contact with the side wall of the longitudinal beam 12 and move along an extension direction of the longitudinal beam 12. Two ends of the first cross beam 111 protrude beyond the corresponding longitudinal beam 12 for limiting the position of the guiding wheel 205. That is, the limiting plate 2 limits the forward movement of the traveling wheel 203 when the machine is parked. The first cross beam 111 protrudes beyond each end portion (for example, a left end portion and/or a right end portion) of the longitudinal beam 12, that is, the limiting portion 1110 which is configured to limit the backward movement of the guiding wheel 205. Therefore, the present invention operates through dual restriction in the forward and backward directions. Thus, the cleaning robot 200 is jointly limited in the front and rear directions, and the cleaning robot 200 is stably parked at the position shown in FIG. 3.

Referring to FIG. 7 to FIG. 9, the cross beam 11 further includes a third cross beam 113 which is disposed parallel to the first cross beam 111 and the second cross beam 112. The second cross beam 112 is located between the first cross beam 111 and the third cross beam 113. The two longitudinal beams 12 continue to extend from the second cross beam 112 toward the third cross beam 113. The two longitudinal beams 12, the second cross beam 112 and the third cross beam 113 together form an installation space 102 for a photovoltaic module. The photovoltaic module is used to charge the cleaning robot 200. It is generally understood that after the cleaning robot 200 completes the cleaning work, it connects to the photovoltaic modules in the installation space 102 for charging in preparation for next use.

In short, the cross beam 11 includes the first cross beam 111, the second cross beam 112 and the third cross beam 113. The first cross beam 111 is located between the second cross beam 112 and the third cross beam 113. The longitudinal beam 12 includes a first longitudinal beam 121 and a second longitudinal beam 122. The first longitudinal beam 121 and the second longitudinal beam 122 are respectively connected between the second cross beam 112 and the third cross beam 113 on two sides. The parking platform 1 has the parking space 101 and the installation space 102 which are used for parking and charging of the cleaning robot 200, respectively.

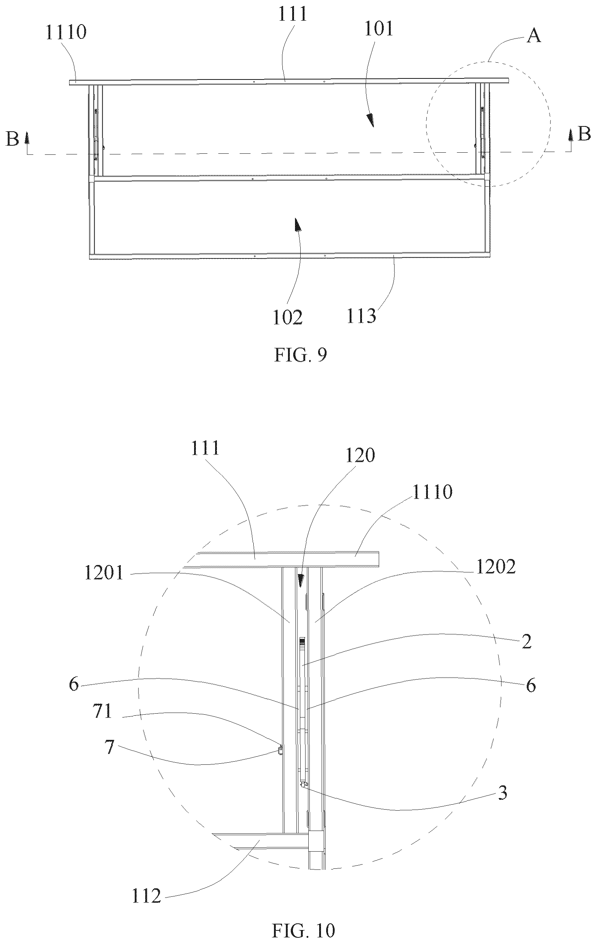

Referring to FIG. 8 and FIG. 10, each longitudinal beam 12 includes a first rod 1201 and a second rod 1202. The first rod 1201 and the second rod 1202 are disposed adjacent to each other to form a clamping space 120 of the limiting plate 2 between the first rod 1201 and the second rod 1202. Each end of the cross beam 11 is provided with the clamping space 120 for the limiting plate 2, which is used to clamp and limit each limiting plate 2 on the left and right sides so as to prevent it from deflecting during up and down rotation.

Continuing to refer to FIG. 8, FIG. 10 and FIG. 11, a gasket plate 6 is further provided between the limiting plate 2 and each of the first rod 1201 and the second rod 1202. The gasket plate 6 is L-shaped as a whole and includes a vertical portion 61 and a horizontal portion 62. Two sides of the vertical portion 61 are aligned with the limiting plate 2 and the first rod 1201/the second rod 1202, respectively. An upper surface of the horizontal portion 62 is aligned with a bottom surface of the first rod 1201 or the second rod 1202, and is provided below the first rod 1201 or the second rod 1202. The arrangement of the horizontal portion 62 enables the gasket plate 6 to be limited by the first rod 1201 or the second rod 1202, thereby preventing the gasket plate 6 from rotating around the hinge shaft 7 and tilting one end, causing interference to the cleaning robot 200 during the parking or de-parking movement, and causing the parking or de-parking to be unable to be completed smoothly. The function of the gasket plate 6 includes, on the one hand, it provides a left-right limit for the limiting plate 2 to prevent the limiting plate 2 from shaking left and right. On the other hand, for process considerations, the limiting plate 2 is located in the clamping space 120 of the first rod 1201 and the second rod 1202 which are disposed left and right. If the gasket plates 6 on two sides are eliminated, the limiting plate 2 needs to be thickened. On the one hand, it will lead to an increase in cost, and on the other hand, the increase in thickness will make processing more difficult.

Referring to FIG. 8, the lower gear lever 4 includes a main body portion 41 fixedly connected to a lower part of each longitudinal beam 12 and an end cantilever portion 42 extending forwardly from the main body portion 41. The end cantilever portion 42 is tilted upwardly to guide the windproof hook 204 to enter below the main body portion 41. Referring to FIG. 1 to FIG. 3, the windproof hook 204 includes the vertical rod 2041 and the horizontal rod 2042. During the parking process of the cleaning robot 200 from front to back, the horizontal rod 2042 of the windproof hook 204 gradually extends into the lower part of the lower gear lever 4 and hooks it, so that the lower gear lever 4 can provide an upward position limit for the cleaning robot 200.

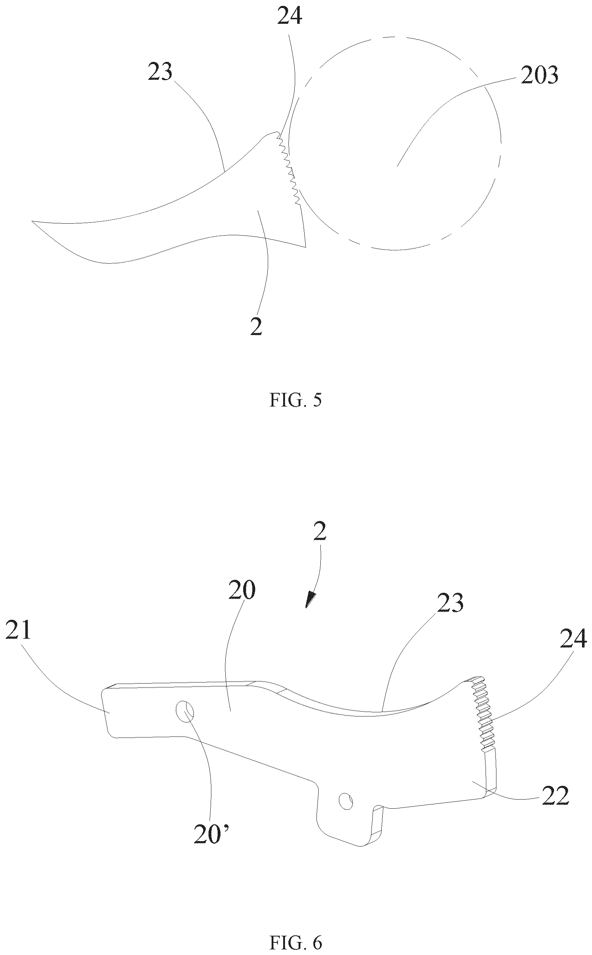

Referring to FIG. 6, FIG. 8, FIG. 11 and FIG. 12 in combination with FIG. 1 to FIG. 3, the parking mechanism 100 of the present invention further includes a hinge shaft 7. The hinge portion 20 defines a hinge hole 20'. The hinge shaft 7 passes through the hinge hole 20', and is positioned and connected to the longitudinal beam 12. The function of the hinge shaft 7 is to provide a rotational connection between the limiting plate 2 and the longitudinal beam 12. The limiting plate 2 surrounds the hinge shaft 7, and when one end is pressed down, the other end is lifted up, just like a seesaw. Specifically, one end of the hinge shaft 7 passes through the gasket plate 6, the limiting plate 2 and the first rod 1201, and then is limited by a latch 71. The hinge shaft 7 defines a through hole through which the latch 71 passes. The other end of the hinge shaft 7 is provided with a limiting end portion 72. A diameter of the limiting end portion 72 is larger than a diameter of each of the through holes opened on the gasket plate 6, the limiting plate 2 and the first rod 1201 so as to allow the hinge shaft 7 to pass through. By providing the limiting end portion 72 and the latch 71, the hinge shaft 7 is limited. Furthermore, the second rod 1202 defines a through hole 12020 corresponding to the hinge shaft 7. After the hinge shaft 7 passes through the through hole 12020, one end where the limiting end portion 72 is located is limited by the gasket plate 6 on one side of the limiting plate 2, and the other end passes through the limiting plate 2, the gasket plates 6 located on two sides of the limiting plate 2, and the first rod 1201, and then is limited by the latch 71. The through hole 12020 is not smaller than the diameter of the limiting end portion 72 to ensure that the hinge shaft 7 can be assembled smoothly.

The present invention also relates to a parking system, which includes a cleaning robot 200 and the parking mechanism 100 as described above. The cleaning robot 200 includes the roller brush shaft 201, the front traveling wheel 202 and the rear traveling wheel 203. The roller brush shaft 201 is connected between the front traveling wheel 202 and the rear traveling wheel 203. While the roller brush shaft 201 follows the front and rear traveling wheels 202, 203 in walking forward and backward, it can also be driven to rotate by its own power source. The cleaning robot 200 also has the L-shaped windproof hook 204. The windproof hook 204 includes the vertical rod 2041 and the horizontal rod 2042. The horizontal rod 2042 of the windproof hook 204 extends into the lower part of the lower gear lever 4 and hooks it, so that the lower gear lever 4 can provide an upward position limit for the cleaning robot 200. The cleaning robot 200 also includes the plurality of guiding wheels 205. The guiding wheels 205 are located on two sides of the cleaning robot 200 and play a guiding role for the cleaning robot 200 to walk on the parking platform 1.

The working principle of the parking system of the present invention is that when the cleaning robot 200 needs to be parked, a motor drives the front traveling wheel 202 and the rear traveling wheel 203 to rotate forwardly. The self-gravity of the cleaning robot 200 enables the rear traveling wheel 203 to cross from the first end portion 21 to the second end portion 22 on the limiting plate 2. In this way, the cleaning robot 200 enters the parking state, and the limiting plate 2 provides forward position limit. Besides, in the parked state, the end portion of the first cross beam 111 protrudes through the limiting portion 1110 of the corresponding longitudinal beam 12. The limiting portion 1110 is used to provide backward position limit for the guiding wheel 205 of the cleaning robot 200. The limiting plate 2 and the limiting portion 1110 provide a common limiting position for the cleaning robot 200 in both front and rear directions. The lower gear lever 4 cooperates with the windproof hook 204 of the cleaning robot 200 to limit the upward movement of the cleaning robot 200. When the cleaning robot 200 needs to perform cleaning work, the motor drives the front traveling wheel 202 and the rear traveling wheel 203 to rotate in opposite directions. The toothed structure of the second end portion 22 contacts the rear traveling wheel 203 to generate friction. The friction force enables the rear traveling wheel 203 to cross backward from the second end portion 22 to the first end portion 21 on the limiting plate 2. Furthermore, the windproof hook 204 of the cleaning robot 200 and the lower gear lever 4 are disengaged, so that the cleaning robot 200 is released from the parked state.

The present invention firstly provides a forward position limit through the limiting plate 2 to prevent the cleaning robot 200 from leaving a parking position and returning to a charging position in unexpected circumstances. Secondly, the limiting plate 2 and the limiting portion 1110 are used to provide a common limit to the cleaning robot 200 in both forward and backward directions, so that the cleaning robot 200 can stably stay in the parking position and cannot move forward or backward. Thirdly, the lower gear lever 4 can cooperate with the windproof hook 204 of the cleaning robot 200. Specifically, the horizontal rod 2042 of the windproof hook 204 extends below the lower gear lever 4 and hooks it, so that the lower gear lever 4 can provide an upward position limit for the cleaning robot 200, which is used to prevent the cleaning robot 200 from moving upwardly when the parking platform 1 is parked, thereby improving the stability during the parked state. Finally, the present invention also allows the vertical rod 2041 of the windproof hook 204 to contact the lower gear lever 4 and/or the longitudinal beam 12 of the parking platform 1, thereby providing left and right position limits for the cleaning robot 200 when parked. As a result, it prevents the cleaning robot 200 from moving left and right due to the influence of external force (such as wind) in the parked state.

The above embodiments are only used to illustrate the present invention and do not limit the technical solutions described in the present invention. The understanding of this description should be based on those skilled in the art. Although the present invention has been described in detail with reference to the above-mentioned embodiments, it is understandable to those skilled in the art that those skilled in the art can still make modifications or equivalent substitutions to the present invention. All technical solutions and improvements that do not depart from the spirit and scope of the present invention shall be covered by the claims of the present invention.

## Claims

1. A parking mechanism (100), comprising:
a parking platform (1);
a limiting plate (2) configured to limit a forward movement of a traveling wheel of a cleaning robot (200); the limiting plate (2) comprising a hinge portion (20) positioned and connected to the parking platform (1); the limiting plate (2) further comprising a first end portion (21) and a second end portion (22) which are disposed oppositely relative to the hinge portion (20); the second end portion (22) being capable of protruding upwardly beyond the parking platform (1); and
an elastic element (3), one end of the elastic element (3) being connected to the first end portion (21) of the limiting plate (2), and another end of the elastic element (3) being connected to a carrier.

2. The parking mechanism (100) according to claim 1, wherein the elastic element (3) is a tension spring; in a natural state of the elastic element (3), the second end portion (22) protrudes beyond the parking platform (1); in a stretched state of the elastic element (3), the second end portion (22) is pressed by a self-gravity of the cleaning robot (200) to be hidden under the parking platform (1).

3. The parking mechanism (100) according to claim 1, wherein the limiting plate (2) comprises an upper edge (23) connected between the first end portion (21) and the second end portion (22); the upper edge (23) at least partially adopts an arc-shaped structure with an upward opening.

4. The parking mechanism (100) according to claim 1, wherein the limiting plate (2) comprises a side edge (24) located at the second end portion (22); the side edge (24) is provided with a toothed structure configured to contact a traveling wheel of the cleaning robot (200).

5. The parking mechanism (100) according to claim 1, wherein the cleaning robot (200) comprises a windproof hook (204); the parking mechanism (100) comprises a lower gear lever (4); the lower gear lever (4) is fixedly installed below the parking platform (1) at a distance from the parking platform (1), and cooperates with the windproof hook (204) of the cleaning robot (200) to limit an upward movement of the cleaning robot (200); another end of the elastic element (3) is connected to the lower gear lever (4).

6. The parking mechanism (100) according to claim 5, wherein the parking mechanism (100) further comprising a limiting pin (5); the limiting pin (5) is fixed on the limiting plate (2) and is movable up and down between the parking platform (1) and the lower gear lever (4) for position limit.

7. The parking mechanism (100) according to claim 5, wherein the cleaning robot (200) further comprises a guiding wheel (205); the parking platform (1) at least comprises two cross beams (11) arranged in parallel in a front-rear direction and two longitudinal cross beams (12) arranged in parallel in a left-right direction; the cross beam (11) comprises a first cross beam (111) and a second cross beam (112); the first cross beam (111), the second cross beam (112) and the two longitudinal cross beams (12) together form a parking space (101) for the cleaning robot (200); the first cross beam (111) comprises a limiting portion (1110) provided at an end of the first cross beam (111); the limiting portion (1110) protrudes beyond a corresponding longitudinal cross beam (12) and is configured to provide a position limit for the guiding wheel (205) of the cleaning robot (200).

8. The parking mechanism (100) according to claim 7, wherein the cross beam (11) further comprises a third cross beam (113) arranged parallel to the first cross beam (111) and the second cross beam (112); the second cross beam (112) is located between the first cross beam (111) and the third cross beam (113); the two longitudinal cross beams (12) continue to extend from the second cross beam (112) in a direction close to the third cross beam (113); the two longitudinal cross beams (12), the second cross beam (112) and the third cross beam (113) together form an installation space (102) for a photovoltaic module; the photovoltaic module is configured to charge the cleaning robot (200).

9. The parking mechanism (100) according to claim 7, wherein each of the longitudinal cross beams (12) comprises a first rod (1201) and a second rod (1202); the first rod (1201) and the second rod (1202) are disposed adjacent to each other to form a clamping space (120) of the limiting plate (2) between the first rod (1201) and the second rod (1202).

10. The parking mechanism (100) according to claim 9, wherein a gasket plate (6) is further provided between the limiting plate (2) and each of the first rod (1201) and the second rod (1202); the gasket plate (6) comprises a vertical portion (61) and a horizontal portion (62); one side of the vertical portion (61) is aligned with the limiting plate (2), and another side of the vertical portion (61) is aligned with the first rod (1201) or the second rod (1202); the horizontal portion (62) is flush with a bottom of the first rod (1201) or the second rod (1202).

11. The parking mechanism (100) according to claim 7, wherein the lower gear lever (4) comprises a main body portion (41) fixedly connected below each longitudinal cross beam (12) and an end cantilever portion (42) extending forwardly from the main body portion (41); the end cantilever portion (42) is tilted upwardly to guide the windproof hook (204) to enter below the main body portion (41).

12. The parking mechanism (100) according to claim 7, wherein the parking mechanism (100) further comprising a hinge shaft (7); the hinge portion (20) defines a hinge hole (20'); the hinge shaft (7) passes through the hinge hole (20'), and is positioned and connected to the longitudinal cross beam (12).

13. A parking system, comprising: a cleaning robot (200) and the parking mechanism (100) according to any one of claims 1 to 12; the parking mechanism (100) providing a position limit for the cleaning robot (200); the cleaning robot (200) comprising a brush roller shaft (201), two front traveling wheels (202) and two rear traveling wheels (203); the brush roller shaft (201) being connected between the front traveling wheels (202) and the rear traveling wheels (203).

14. The parking system according to claim 13, wherein the cleaning robot (200) further comprises an L-shaped windproof hook (204); the windproof hook (204) comprises a vertical rod (2041) and a horizontal rod (2042); the longitudinal cross beam (12) and/or the lower gear lever (4) provide left-right direction limit for the vertical rod (2041); the horizontal rod (2042) of the windproof hook (204) extends below the lower gear lever (4) so that the lower gear lever (4) is able to provide an upward position limit for the cleaning robot (200).

15. The parking system according to claim 13, wherein the cleaning robot (200) further comprises guiding wheels (205); the guiding wheels (205) are located on two sides of the cleaning robot (200) to guide the cleaning robot (1) while walking on the parking platform (1).
